# EUROPÄISCHE PATENTSCHRIFT

(11) **EP 1 627 391 B1**
(45) Veröffentlichungstag und Bekanntmachung des Hinweises auf die Patenterteilung: **18.04.2012**
(21) Anmeldenummer: 04730524.8
(22) Anmeldetag: 30.04.2004
(51) Int. Cl.: G11B 27/10, G11B 27/32, G03B 31/00

(54) **VORRICHTUNG UND VERFAHREN ZUM SYNCHRONISIEREN EINES AUDIOSIGNALS MIT EINEM FILM**
DEVICE AND METHOD FOR SYNCHRONIZING AN AUDIO SIGNAL WITH A FILM
SYSTEME ET PROCEDE POUR SYNCHRONISER UN SIGNAL AUDIO AVEC UN FILM

(30) Priorität: 20.05.2003 DE 10322722
(43) Veröffentlichungstag der Anmeldung: 22.02.2006
(73) Patentinhaber: Fraunhofer-Gesellschaft zur Förderung der angewandten Forschung e.V., 80686 München (DE)
(72) Erfinder: RODIGAST, René, 07639 Tantenhain (DE); MUNDERLOH, Marco, 30165 Hannover (DE); SPORER, Thomas, 90766 Fürth (DE); BECKINGER, Michael, 99084 Erfurt (DE)
(74) Vertreter: Zinkler, Franz
(86) Internationale Anmeldenummer: PCT/EP2004/004602
(87) Internationale Veröffentlichungsnummer: WO 2004/105034

(56) Entgegenhaltungen:
- WO-A-94/24817
- PATENT ABSTRACTS OF JAPAN vol. 015, no. 495 (P-1288), 13. Dezember 1991 (1991-12-13) -& JP 03 214487 A (MITSUBISHI ELECTRIC CORP), 19. September 1991 (1991-09-19)

## Beschreibung

Die vorliegende Erfindung bezieht sich auf Kinofilm- bzw. Videofilmanwendungen und insbesondere auf die Synchronisation eines Audiosignals, das jedem Einzelbild des Films zugeordnete Abtastwerte aufweist, mit den Einzelbildern des Kino- bzw. Videofilms.

Es besteht ein steigender Bedarf an neuen Technologien und innovativen Produkten im Bereich der Unterhaltungselektronik. Dabei ist es eine wichtige Voraussetzung für den Erfolg neuer multimedialer Systeme, optimale Funktionalitäten bzw. Fähigkeiten anzubieten. Erreicht wird das durch den Einsatz digitaler Technologien und insbesondere der Computertechnik. Beispiele hierfür sind die Applikationen, die einen verbesserten realitätsnahen audiovisuellen Eindruck bieten. Bei bisherigen Audiosystemen liegt ein wesentlicher Schwachpunkt in der Qualität der räumlichen Schallwiedergabe von natürlichen, aber auch von virtuellen Umgebungen.

Verfahren zur mehrkanaligen Lautsprecherwiedergabe von Audiosignalen sind seit vielen Jahren bekannt und standardisiert. Alle üblichen Techniken besitzen den Nachteil, dass sowohl der Aufstellungsort der Lautsprecher als auch die Position des Hörers dem Übertragungsformat bereits eingeprägt sind. Bei falscher Anordnung der Lautsprecher im Bezug auf den Hörer leidet die Audioqualität deutlich. Ein optimaler Klang ist nur in einem kleinen Bereich des Wiedergaberaums, dem so genannten Sweet Spot, möglich.

Ein besserer natürlicher Raumeindruck sowie eine stärkere Einhüllung bei der Audiowiedergabe kann mit Hilfe einer neuen Technologie erreicht werden. Die Grundlagen dieser Technologie, die so genannte Wellenfeldsynthese (WFS; WFS = Wave-Field Synthesis), wurden an der TU Delft erforscht und erstmals in den späten 80er-Jahren vorgestellt (Berkhout, A.J.; de Vries, D.; Vogel, P.: Acoustic control by Wave-field Synthesis. JASA 93, 1993).

Infolge der enormen Anforderungen dieser Methode an Rechnerleistung und Übertragungsraten wurde die Wellenfeldsynthese bis jetzt nur selten in der Praxis angewendet. Erst die Fortschritte in den Bereichen der Mikroprozessortechnik und der Audiocodierung gestatten heute den Einsatz dieser Technologie in konkreten Anwendungen. Erste Produkte im professionellen Bereich werden nächstes Jahr erwartet. In wenigen Jahren sollen auch erste Wellenfeldsynthese-Anwendungen für den Konsumerbereich auf den Markt kommen.

Die Grundidee von WFS basiert auf der Anwendung des Huygens'schen Prinzips der Wellentheorie:

Jeder Punkt, der von einer Welle erfasst wird, ist Ausgangspunkt einer Elementarwelle, die sich kugelförmig bzw. kreisförmig ausbreitet.

Angewandt auf die Akustik kann durch eine große Anzahl von Lautsprechern, die nebeneinander angeordnet sind (einem so genannten Lautsprecherarray), jede beliebige Form einer einlaufenden Wellenfront nachgebildet werden. Im einfachsten Fall, einer einzelnen wiederzugebenden Punktquelle und einer linearen Anordnung der Lautsprecher, müssen die Audiosignale eines jeden Lautsprechers mit einer Zeitverzögerung und Amplitudenskalierung so gespeist werden, dass sich die abgestrahlten Klangfelder der einzelnen Lautsprecher richtig überlagern. Bei mehreren Schallquellen wird für jede Quelle der Beitrag zu jedem Lautsprecher getrennt berechnet und die resultierenden Signale addiert. Befinden sich die wiederzugebenden Quellen in einem Raum mit reflektierenden Wänden, dann müssen auch Reflexionen als zusätzliche Quellen über das Lautsprecherarray wiedergegeben werden. Der Aufwand bei der Berechnung hängt daher stark von der Anzahl der Schallquellen, den Reflexionseigenschaften des Aufnahmeraums und der Anzahl der Lautsprecher ab.

Der Vorteil dieser Technik liegt im Besonderen darin, dass ein natürlicher räumlicher Klangeindruck über einen großen Bereich des Wiedergaberaums möglich ist. Im Gegensatz zu den bekannten Techniken werden Richtung und Entfernung von Schallquellen sehr exakt wiedergegeben. In beschränktem Maße können virtuelle Schallquellen sogar zwischen dem realen Lautsprecherarray und dem Hörer positioniert werden.

Obgleich die Wellenfeldsynthese für Umgebungen gut funktioniert, deren Beschaffenheiten bekannt sind, treten doch Unregelmäßigkeiten auf, wenn sich die Beschaffenheit ändert bzw. wenn die Wellenfeldsynthese auf der Basis einer Umgebungsbeschaffenheit ausgeführt wird, die nicht mit der tatsächlichen Beschaffenheit der Umgebung übereinstimmt. Die Technik der Wellenfeldsynthese kann jedoch ebenfalls vorteilhaft eingesetzt werden, um eine visuelle Wahrnehmung um eine entsprechende räumliche Audiowahrnehmung zu ergänzen. Bisher stand bei der Produktion in virtuellen Studios die Vermittlung eines authentischen visuellen Eindrucks der virtuellen Szene im Vordergrund. Der zum Bild passende akustische Eindruck wird in der Regel durch manuelle Arbeitsschritte in der sogenannten Postproduktion nachträglich dem Audiosignal aufgeprägt oder als zu aufwendig und zeitintensiv in der Realisierung eingestuft und daher vernachlässigt. Dadurch kommt es üblicherweise zu einem Widerspruch der einzelnen Sinnesempfindungen, der dazu führt, daß der entworfene Raum, d. h. die entworfene Szene, als weniger authentisch empfunden wird.

Nicht nur bei der oben kurz dargestellten WellenfeldSynthese, bei der eine Anzahl von Lautsprechern mit eigenen Tonsignalen versorgt werden muss, die in der Größenordnung über 100 Stück sein kann, sondern auch bei herkömmlichen Kinoanwendungen, bei denen beispielsweise Dolby 5.1 bzw. 7.1 eingesetzt wird oder auch bei normalen Stereoanwendungen und sogar auch bei Monoanwendungen besteht immer der Bedarf, den Film und das Audiomaterial entweder in einer häuslichen Umgebung oder insbesondere in einer Kinoumgebung zu synchronisieren.

Ferner muss bandgestütztes Videomaterial mit Audiomaterial im Studiobereich synchronisiert werden. Hierzu wird üblicherweise eine Standard-Timecode für den Kino- bzw. Studiobetrieb eingesetzt. Der Standard-Timecode wird auch als LTC (LTC = Longitudinal Time Code) oder allgemein als Zeitcode bezeichnet. Der longitudinale Zeitcode als Beispiel für irgendeinen möglichen Zeitcode, der eine Position eines Einzelbildes in der Folge von Einzelbildern des Films anzeigt, ist ein Zeitcode, der typischerweise auf das Filmmaterial aufbelichtet ist und zwar so, dass jedes Einzelbild einen eigenen Zeitcode erhält.

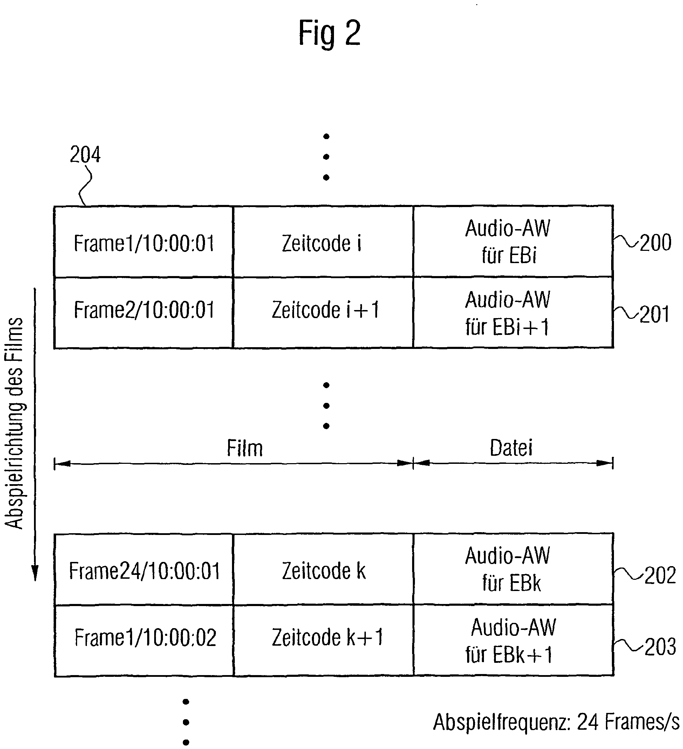

Eine mögliche Gestaltung des Zeitcodes ist in Fig. 2 dargestellt. Fig. 2 zeigt eine Folge von Einzelbildern 200, 201, 202, 203, wobei das Einzelbild 200 als Einzelbild EBi bezeichnet wird, während das Einzelbild 201 als Einzelbild EBi+1 bezeichnet wird. Fig. 2 zeigt gewissermaßen einen "aufgerollten" Abschnitt eines Films, der bei dem in Fig. 2 gezeigten Beispiel 24 Frames pro Sekunde hat. In einem Feld 204, das bei der schematischen Darstellung von Fig. 2 jedem Einzelbild zugeordnet ist, ist die Zählweise des longitudinalen Zeitcodes dargestellt. Der longitudinale Zeitcode besteht hinsichtlich seiner kodierten Information aus einer "Zeitinformation" und einer "Frame-Information". Die Zeitinformnation ist in Fig. 2 schematisch derart dargestellt, dass das Einzelbild i (200) ein Bild ist, dessen Zeitinformation z. B. 10 Stunden, 0 Minuten und 1 Sekunde umfasst. Die Frame-Information bezeichnet den ersten Frame in dieser Sekunde für das Bild 200. Analog bezeichnet die Frame-Information für das Einzelbild 202 den 24. Frame zum "Zeitpunkt" 10 Stunden, 0 Minuten und 1 Sekunde.

Da bei dem in Fig. 2 gezeigten Ausführungsbeispiel davon ausgegangen wird, dass der Film eine Abspielfrequenz von 24 Frames pro Sekunde hat (es existieren auch Abspielfrequenzen von 25 Frames pro Sekunde), ist die Zeitinformation des Einzelbildes k+1 (203) 10 Stunden, 0 Minuten und 2 Sekunden, während die Frame-Information dieses Einzelbildes wieder gleich 1 ist, da dies der erste Frame in der "neuen" Sekunde ist.

Es sei darauf hingewiesen, dass der Startpunkt der Zeitinformation beliebig gewählt werden kann. Wird der Startpunkt der Zeitinformation beispielsweise auf Null gesetzt, und dauert ein Film 90 Minuten, so wird die maximale Zeitinformation 1 Stunde, 30 Minuten, 0 Sekunden sein. Wesentlich bei der Zeitinformation ist die Tatsache, dass jedes Einzelbild eine originäre Zeitcodeinformation erhält, die es ermöglicht, die Position jedes Einzelbildes in der Folge von Einzelbildern, also in dem Film, zu rekonstruieren.

Die Zeitinformation und die Frame-Information werden beide gemeinsam mittels des Zeitcodes kodiert, der beliebig wählbar ist, und der z. B. ein 8-Bit-Code aus binären Nullen und Einsen ist. Je nach Implementierung kann für eine binäre Null eine dunkle Stelle auf dem Film aufbelichtet werden, und kann für eine binäre Eins eine helle Stelle auf den Film aufbelichtet werden oder umgekehrt. Alternativ ist es jedoch ebenfalls möglich und in der Praxis bewährt, eine "Null" z.B. als zwei kurze Hell/Dunkel-Wechsel zu kodieren, und eine "Eins" als einen langen Hell/Dunkel-Wechsel zu kodieren.

Jedem Einzelbild zugeordnet sind Audio-Abtastwerte. Wenn der Fall betrachtet wird, dass der Film eine Abspielfrequenz von 24 Frames pro Sekunde hat, und dass die Audio-Abtastwerte mit einer Abtastfrequenz von z.B. 48 kHz vorliegen, so sind jedem Frame 2000 diskrete Audio-Abtastwerte zugeordnet. Diese Abtastwerte werden typischerweise extern in Dateien abgespeichert und bei der Filmwidergabe synchronisiert zu den Einzelbildern digital/analog-gewandelt, verstärkt und an die entsprechend positionierten Lautsprecher beispielsweise im Kino geliefert.

Im Kino/Filmbereich werden unterschiedlichste Methoden angewandt, um das Bildmaterial (Video und Film) mit digitalem Audiomaterial (WAV-Dateien, MPEG-4-Dateien ...) zu synchronisieren. Hierbei ist zu beachten, dass das Audio/Videomaterial oft in analoger Form und getrennt voneinander vorliegt und nach separater Digitalisierung Frame-genau und sample-genau zusammengesetzt werden soll. Für diese Synchronisation wird der im Hinblick auf Fig. 2 beschriebene Zeitcode verwendet.

Zusätzlich werden solche bekannten Systeme mit einem zentral generierten und in der Regel stabilen Takt versorgt, der auch als Wordclock (Worttakt) bezeichnet wird. Je nach Ausführungsform ist die Frequenz dieses Wordclocks beispielsweise gleich der Frequenz, mit der die gespeicherten diskreten Abtastwerte abgetastet worden sind.

Nachdem bandgestützte Video-Abspielgeräte sowie Filmgeräte mechanische Systeme sind, deren Drehzahl über der Zeit variieren kann, können sowohl Zeitcode-Informationen als auch Wordclockinformationen, die auf dem Film aufbelichtet sind, nur unsicher ausgelesen werden. Insbesondere sind diese auf dem Film aufbelichteten Informationen nach dem typischerweise optischen Auslesen jitterbehaftet, was die Gefahr mit sich bringt, dass eine fehlerhafte Verarbeitung dieser Informationen stattfindet, was zu einem Absturz eines Systems führen kann, das insbesondere in relativ kritischen zeitlichen Einschränkungen arbeiten muss. dies ist besonders bei Wellenfeldsynthesesystemen der Fall ist, bei denen es gerade auf das synchrone Zusammenspiel der von allen Lautsprechern ausgegebenen Audiosignalen ankommt, um entsprechende Wellenfronten auf der Basis der von den Lautsprechern erzeugten Einzelwellen zu rekonstruieren.

Im Stand der Technik sind verschiedene Synchronisationslösungen bekannt und lizenzierbar. So sind beim System SDDS oder DTS die Zeitinformationen digital kodiert und auf der Filmperforation ausbelichtet. Dort ist der Zeitcode auf dem Film kodiert. Der Zeitcode wird in einem Prozessor dekodiert und dazu verwendet, um eine zeitsynchrone Wiedergabe von Bild und Ton zu erreichen. Insbesondere befindet sich auf solchen Filmen eine spezielle Zeitcodespur auf dem Filmstreifen. Dieser Zeitcode wird von einem speziellen Reader vom Film ausgelesen. Ein ebenfalls erforderlicher spezieller Decoder sorgt dafür, dass das auf CD-ROM/DVD vorhandene Audiomaterial synchron zum Film abgespielt wird. Das Bild und der Analogton, der auch als Lichtton bezeichnet wird, da er auf dem Filmmaterial aufbelichtet ist, sind in definiertem Versatz auf dem Filmstreifen angeordnet, um die Delay bei der Aufbereitung der Toninformationen zu berücksichtigen. Eine Synchronisation erfolgt dabei manuell im Prozessor über eine Einstellung der Delay-Time (Dolby A, SR).

Für alle solchen Systeme ist eine spezielle Hardware erforderlich, nämlich der spezielle Reader und der spezielle Decoder. Ferner müssen in den Film-Kopierwerken für das jeweilige Verfahren spezielle Belichtungsgeräte verwendet werden, um die entsprechenden Informationen auf den Film zu belichten. Hierzu kommt die Tatsache, dass verschiedene Synchronisations/Belichtungs-Konzepte untereinander nicht kompatibel sind, so dass auf verschiedenen Filmen unterschiedliche Tonformate isoliert oder nebeneinander existieren können, derart, dass ein einmal kopierter Film für möglichst alle Kinosysteme geeignet ist. Es hat sich jedoch herausgestellt, dass das Lichttonformat, also eine Lichttonspur, auf der typischerweise Toninformationen auf den Film aufbelichtet werden, auf allen Filmkopien zu finden ist, da dieser Lichtton eine Havarievariante sicherstellt. Dies bedeutet, dass dann, wenn "alle Stricke reißen", wenn also die Synchronisation aufgrund eines Vorrichtungsdefektes versagt und ein Kino beispielsweise voller Leute ist, dennoch der Film zu Ende gespielt werden kann, jedoch nicht mehr auf der Basis des digitalen Tonmaterials, sondern des auf der Lichttonspur aufbelichteten Tonmaterials.

Wesentlich an der Lichttonspur ist jedoch, wie ausgeführt, die Tatsache, dass diese typischerweise auf allen Filmkopien vorhanden ist, und dass typischerweise alle Filmkopiergeräte Vorrichtungen haben, um eine Lichttonspur zu belichten, und dass typischerweise alle Filmabspielgeräte eine Vorrichtung haben, um die Lichttonspur optisch auszulesen.

Ein Nachteil der beschriebenen Systeme besteht darin, dass diese Systeme typischerweise geschlossene Systeme sind, deren Funktionalität nicht ohne weiteres ermittelbar ist. Dies ist insbesondere dahingehend problematisch, dass die bekannten Systeme nicht für eine beliebige Anzahl von Audiokanälen bereitgestellt werden, sondern lediglich für beispielsweise Dolby 5.1 oder 7.1. Für Wellenfeldsyntheseanwendungen reichen diese sechs bzw. acht Kanäle jedoch bei weitem nicht aus, so dass für diese Systeme derzeit keine geeigneten Bild/Ton-Synchronisationskonzepte existieren. Weiterhin ist nachteilhaft, dass verschiedene Konzepte existieren, die untereinander typischerweise nicht kompatibel sind, so dass eine Weiterverbreitung insbesondere von Wellenfeldsynthese-Film/Ton-Material problematisch ist.

Die WO 94/24817 offenbart ein Verfahren und eine Vorrichtung zum Synchronisieren eines Stroms von Bilddaten mit einem entsprechenden Strom von Audiodaten. Hierzu wird eine Referenzzeitbasis basierend auf Timecödes erstellt, die in den Ton- und Bildinformationen enthalten sind. Die Referenzzeitbasis wird dann verwendet, um eine Ausgabe einer digitalisierten Quelle und eine Ausgabe einer Quelle, die digital oder analog sein kann, zu synchronisieren. Insbesondere wird ein Einzelbild aufgezeichnet und anhand des aufgezeichneten Einzelbildes eine digitalisierte Darstellung erstellt, die dann gespeichert wird. Ferner werden Timecodes in dem Bild decodiert und zur Erstellung einer Referenzzeitbasis verwendet. Darüber hinaus wird ein analoges Audiosignal digitalisiert. Ferner werden Zeitcodes des Audiosignals decodiert und zusammen mit dem digitalisierten Audiosignal abgespeichert und ebenfalls zur Erzeugung der Referenzzeitbasis verwendet.

Die JP 3214487 offenbart einen Toneditor. Unter Verwendung eines Zeitcodelesers wird ein Zeitcode aus einem Film ausgelesen, der in Übereinstimmung mit einem Zeitcode gebracht wird, der unter Verwendung eines Audiobandrecorders von einem Magnetband ausgelesen wird. Ferner wird ein Zähler, der einen Tachopuls zählt, der von der Zählerrolle eines Projektors erzeugt wird, zurückgesetzt und dahingehend eingestellt, um von Null aus loszuzählen. Der Synchronbetrieb des Recorders für den Film wird basierend auf dem Zählwert des Tachopulses ausgeführt. Dadurch wird ein Audiosignal synchron zu dem angezeigten Videosignal ausgelesen und reproduziert.

Die Aufgabe der vorliegenden Erfindung besteht darin, ein flexibles Konzept zum Synchronisieren eines Audiosignals mit einem Film zu schaffen, bei dem die Anzahl der zu synchronisierenden Audiokanäle flexibel einstellbar ist.

Diese Aufgabe wird durch die Vorrichtung zum Synchronisieren nach Patentanspruch 1, das Verfahren zum Synchronisieren nach Patentanspruch 17 oder das Computer-Programm nach Patentanspruch 18 gelöst.

Der vorliegenden Erfindung liegt die Erkenntnis zugrunde, dass die Flexibilität zur Synchronisation einer beliebigen Anzahl von Audiokanälen mit einem Film dadurch erreicht wird, dass der auf dem Film aufbelichtete Zeitcode nicht selbst zum Synchronisieren der einen oder der mehreren Audioverarbeitungseinrichtungen verwendet wird, sondern lediglich dazu, einen Startwert für einen eigenen Zeitcode-Generator zu erzeugen, und dazu, um die von dem Zeitcode-Generator erzeugten Synthese-Zeitcodes im Falle einer zu großen Phasenabweichung derselben zu den entsprechenden ausgelesenen Zeitcodes hinsichtlich ihrer zeitlichen Länge zu manipulieren, derart, dass die eine oder die mehreren zu synchronisierenden Audioverarbeitungseinrichtungen nicht mit den typischerweise optisch erfassten Zeitcodes synchronisiert werden, sondern mit einer Folge von Synthese-Zeitcodes bzw. manipulierten Synthese-Zeitcodes, die definierte Flankensteilheiten haben, so dass eine sichere Erfassung der Zeitcodes für die Einzelbilder durch die Audioverarbeitungseinrichtung möglich wird.

In anderen Worten ausgedrückt wird erfindungsgemäß der gesamte Zeitcode für die Einzelbilder neu generiert, wobei jedoch der von dem Film erfasste Zeitcode dazu verwendet wird, um einerseits einen Startwert des Zeitcode-Generators zu liefern, und um andererseits Phasenabweichungen durch Manipulieren, d.h. Verlängern oder Verkürzen der Synthese-Zeitcodes, entgegenzuwirken.

Bei dem bevorzugten Ausführungsbeispiel der vorliegenden Erfindung werden die Zeitcodes auf die typischerweise immer vorhandene Lichttonspur entweder direkt aufbelichtet oder in den Lichtton psychoakustisch maskiert eingebettet.

Bei einem weiteren bevorzugten Ausführungsbeispiel ist die Manipulationseinrichtung derart ausgebildet, dass sie nicht den gesamten Versatz korrigiert, indem sie eine relativ starke Verkürzung bzw. Verlängerung eines Synthese-Zeitcodes bewirkt, sondern, dass immer nur eine relativ kleine Verkürzung/Verlängerung eines Synthese-Zeitcodes durchgeführt wird, um Artefakte bei der Audiowiedergabe zu reduzieren bzw. sogar ganz zu eliminieren. Hier sei darauf hingewiesen, dass das Weglassen oder Wiederholen von einem oder einer kleinen Anzahl von Audio-Abtastwerten von einem Zuhörer noch nicht als Knacksen oder etwas Ähnliches wahrgenommen wird. Bei diesem bevorzugten Ausführungsbeispiel wird daher ein Phasenversatz nicht "auf einen Schlag" korrigiert, sondern nur "nach und nach", um Artefakte zu vermeiden.

Bei einem weiteren bevorzugten Ausführungsbeispiel der vorliegenden Erfindung ist die Synthese-Zeitcode-Manipulationseinrichtung ausgebildet, um von einem Wordclock getaktet zu werden, dessen Frequenz von der Abspielfrequenz abhängt, mit der die Einzelbilder geliefert werden. In diesem Fall ist bereits eine Grobkorrektur der aufgrund der verwendeten mechanischen Systeme unvermeidlichen Abspielfrequenzschwankungen erhalten, wobei die Manipulation der Synthese-Zeitcodes dann nur noch Schwankungen aufnehmen muss, die zwischen zwei Zeitpunkten auftreten, zu denen der Wordclock neu aktualisiert wird.

Bei einem weiteren Ausführungsbeispiel der vorliegenden Erfindung ist für jeden Audiokanal, der in dem Audiosignal erhalten ist, eine eigene Audioverarbeitungseinrichtung vorgesehen, wobei jede Audioverarbeitungseinrichtung mit einer Kopie der Folge aus Synthese-Zeitcodes und manipulierten Synthese-Zeitcodes versorgt wird, derart, dass eine zeitsynchrone Abspielung aller Audiokanäle einerseits und eine zeitsynchrone Abspielung der Audiokanäle bezüglich des Filmmaterials andererseits erreicht wird. Alternativ kann auch eine einzige Audioverarbeitungseinrichtung vorgesehen sein, die gesteuert durch die Folge aus Synthese-Zeitcodes bzw. manipulierten Synthese-Zeitcodes sämtliche Audiokanäle auf einen Übertragungsbus legt, mit dem Wiedergabeeinrichtungen für die vorhandenen Lautsprecherkanäle verbunden sind. Dieser Übertragungsbus ist vorzugsweise ein Fire-Wire-Bus gemäß dem Standard IEEE 1394.

Die vorliegende Erfindung ist insbesondere dahingehend vorteilhaft, dass aufgrund der definierten Qualität der Synthese-Zeitcodes bzw. manipulierten Synthese-Zeitcodes ein sicherer Betrieb der Audioverarbeitungsvorrichtungen erreichbar ist, der unabhängig davon ist, wie stark beschädigt/verschmutzt die Zeitcodes auf dem Filmmaterial vorhanden sind. Darüber hinaus ist eine beliebig hohe Anzahl von Kopien dieser digitalen Synthese-Zeitcodes bzw. manipulierten Synthese-Zeitcodes möglich, so dass beliebig Audiozuspieler synchronisierbar sind.

Ein weiterer Vorteil der vorliegenden Erfindung besteht darin, dass im Hinblick auf die Anforderungen an Filmkopiergeräte einerseits und Filmabspielgeräte andererseits auf in üblichen Filmkopieranstalten oder Filmabspielumgebungen vorhandene Hardware zurückgegriffen wird, so dass eine schnelle und weitreichende Verbreitung des erfindungsgemäßen Konzepts ohne Kompatibilitätshürden stattfinden kann.

Bevorzugte Ausführungsbeispiele der vorliegenden Erfindung werden nachfolgend bezugnehmend auf die beiliegenden Zeichnungen detailliert erläutert. Es zeigen:
- Fig. 1: ein Blockschaltbild der erfindungsgemäßen Vorrichtung zum Synchronisieren;
- Fig. 2: eine schematische Darstellung eines typischen linearen Zeitcodes;
- Fig. 3: eine detailliertere Darstellung der Funktionalität des Vergleichers und des Zeitcodemanipulators von Fig. 1;
- Fig. 4: eine Blockdiagrammdarstellung eines erfindungsgemäßen Gesamtsystems gemäß einem Ausführungsbeispiel der vorliegenden Erfindung;
- Fig. 5: eine Blockdiagrammdarstellung eines erfindungsgemäßen Gesamtsystems gemäß einem alternativen Ausführungsbeispiel;
- Fig. 6: eine detailliertere Darstellung der Audioverarbeitungseinrichtung von Fig. 1 gemäß einem bevorzugten Ausführungsbeispiel der vorliegenden Erfindung;
- Fig. 7a: eine detailliertere Darstellung der Funktionalität der Modifikationssteuerung für verkürzte manipulierte Synthese-Zeitcodes; und
- Fig. 7b: eine detailliertere Darstellung der Funktionalität der Modifikationssteuerung für verlängerte manipulierte Synthese-Zeitcodes.

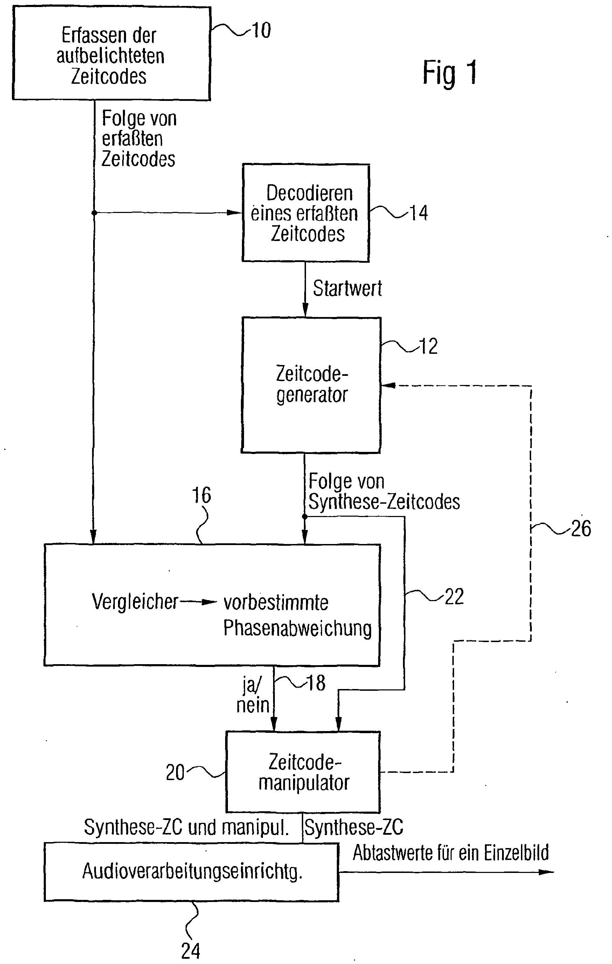

Fig. 1 zeigt ein Blockschaltbild eines bevorzugten Ausführungsbeispiels einer Vorrichtung zum Synchronisieren eines in diskreten Abtastwerten vorliegenden Audiosignals mit einem Film, der eine Folge von Einzelbildern aufweist, die mit einer Einzelbild-Frequenz abspielbar sind. Wie es anhand von Fig. 2 dargestellt worden ist, umfasst jedes Einzelbild einen aufbelichteten Zeitcode, der auf eine Position des Einzelbildes in der Folge von Einzelbildern hinweist. Ferner ist jedem Einzelbild eine vorbestimmte Anzahl von diskreten Abtastwerten des Audiosignals zugeordnet. Falls eine Einzelbild-Abspielfrequenz von 24 Frames pro Sekunde gewählt wird, und falls den Audiosignalen eine Abtastfrequenz von 48 kHz zugrunde liegt, ist einem Einzelbild typischerweise die Anzahl von 2000 diskreten Audioabtastwerten zugeordnet.

Fig. 1 zeigt eine Einrichtung 10 zum Erfassen der aufbelichteten Zeitcodes für die Folge von Einzelbildern. Die Einrichtung 10 zum Erfassen liefert ausgangsseitig eine Folge von erfassten Zeitcodes. Die in Fig. 1 gezeigte Vorrichtung umfasst ferner einen Zeitcode-Generator 12, der ausgebildet ist, um eine Folge von Synthese-Zeitcodes ausgehend von einem Startwert zu erzeugen. Dieser Startwert wird aus der Folge von erfassten Zeitcodes am Ausgang der Einrichtung 10 durch einen Decodierer 14 zum Decodieren eines Zeitcodes der erfassten Folge von Zeitcodes geliefert. Der Zeitcode-Generator 12 erzeugt ausgangsseitig eine Folge von Synthese-Zeitcodes, die ebenso wie die Folge von erfassten Zeitcodes am Ausgang der Einrichtung 10 einem Vergleicher 16 zugeführt wird. Der Vergleicher 16 ist ausgebildet, um vorzugsweise für jedes Paar aus erfasstem Zeitcode und korrespondierendem Synthese-Zeitcode, also für einen erfassten Zeitcode für das Einzelbild i beispielsweise und den Synthese-Zeitcode für das Einzelbild i beispielsweise einen Phasenvergleich durchzuführen, um festzustellen, ob die beiden Zeitcodes zeitlich versetzt, also phasenverschoben sind, oder zeitlich mehr oder weniger zusammenfallen.

An dieser Stelle sei darauf hingewiesen, dass der erfasste Zeitcode aufgrund der Tatsache, dass er vom Film typischerweise durch optische Einrichtungen erfasst worden ist, keine besonders genau definierte Signalform haben wird, auf die sich Audioverarbeitungseinrichtungen sicher synchronisieren können. Dennoch wird ein Minimum an ansteigenden und abfallenden Flanken feststellbar sein. Sollte der erfasste Zeitcode sehr stark korrumpiert sein, so ist dies aufgrund der Tatsache, dass seine Form bekannt ist und genau der Form des parallelen Synthese-Zeitcodes entspricht, dennoch möglich, eine Rekonstruktion zu Zwecken des Phasenvergleichs durchzuführen. Darüber hinaus sei darauf hingewiesen, dass der Zeitcode sich typischerweise über das gesamte Einzelbild auf dem Film erstreckt und daher eine Mehrzahl von ansteigenden und abfallenden Flanken in einem durch den Zeitcode selbst definierten Muster hat. Nachdem für den Phasenvergleich lediglich prinzipiell eine einzige Flanke bzw. ein einziger Nulldurchgang erforderlich ist, (wenn die Lage der Flanke in dem Zeitcode selbst bekannt ist), wird ein Phasenvergleich auch bei stark korrumpierten erfassten Zeitcodes durchführbar sein. Sollte ein Zeitcode so stark korrumpiert sein, dass kein Phasenvergleich durchführbar ist, so ist dies ebenfalls unproblematisch, da dann mit dem parallelen Synthese-Zeitcode keine Manipulation durchgeführt wird und der Vergleich für den nächsten erfassten Zeitcode in der Folge mit dem nächsten Synthese-Zeitcode in der Folge erneut durchgeführt wird, und zwar so lange, bis wieder ein erfasster Zeitcode ermittelt worden ist, auf dessen Basis ein erfolgreicher Phasenvergleich möglich ist.

Stellt der Vergleicher 16 fest, dass zwischen einem Paar aus erfasstem Zeitcode und Synthese-Zeitcode eine Phasenabweichung vorhanden ist, die betragsmäßig einen vorbestimmten Abweichungs-Schwellenwert überschreitet, wird also auf einer Ausgangsleitung 18 ein Bestätigungs-Signal (ja) an einen Zeitcodemanipulator 20 ausgegeben, so wird der Zeitcodemanipulator den aktuellen Synthese-Zeitcode, bei dem diese Abweichung festgestellt worden ist, und der über eine Leitung 22 dem Zeitcodemanipulator 20 bereitgestellt wird, manipulieren. Wird über die Leitung 18 ein Nein-Signal vom Vergleicher 16 zum Manipulator 20 übermittelt, so wird der aktuell betrachtete Synthese-Zeitcode nicht manipuliert und einfach als Synthese-Zeitcode zu einer Audioverarbeitungseinrichtung 24 zu Synchronisationszwecken weitergegeben.

Der Zeitcodemanipulator 20 ist somit ausgebildet, um eine zeitliche Länge eines Synthese-Zeitcodes der vorgefundenen Synthese-Zeitcodes zu verändern, um einen manipulierten Synthese-Zeitcode zu erhalten, wenn der Vergleicher 16 eine Phasenabweichung zwischen einem Zeitcode der erfassten Folge von Zeitcodes und einem Synthese-Zeitcode feststellt, die betragsmäßig einen vorbestimmten Abweichungs-Schwellwert überschreitet. Die Veränderung der zeitlichen Länge der Synthese-Zeitcodes findet so statt, dass eine Phasenabweichung zwischen einem Synthese-Zeitcode, der auf den manipulierten Synthese-Zeitcode folgt, und einem entsprechenden erfassten Zeitcode reduziert ist.

Je nach Phasenvergleichsergebnis wird der Synthese-Zeitcode dahingehend manipuliert, dass er verlängert wird, wenn der Synthese-Zeitcode-Generator 12 im Vergleich zu der Folge von erfassten Zeitcodes zu schnell gelaufen ist. Ist der Synthese-Zeitcode-Generator 12 im Vergleich zu der erfassten Folge von Zeitcodes zu langsam gelaufen, so wird die Manipulation eines Synthese-Zeitcodes in einer Verkürzung des normalerweise von dem Zeitcode-Generator ausgegebenen Standard-Zeitcodes bestehen.

Am Ausgang des Zeitcodemanipulators 20 ergibt sich somit eine Folge von Synthese-Zeitcodes und manipulierten Synthese-Zeitcodes, die der Audioverarbeitungseinrichtung 24 zugeführt wird. Die Audioverarbeitungseinrichtung 24 ist ausgebildet, um eine zeitgesteuerte Bereitstellung der vorbestimmten Anzahl von diskreten Abtastwerten des Audiosignals, die einem Einzelbild zugeordnet sind, dann auszuführen, wenn die Audioverarbeitungseinrichtung einen Synthese-Zeitcode bzw. einen manipulierten Synthese-Zeitcode erfasst, der dem Einzelbild zugeordnet ist. Vorzugsweise wird eine Synchronisation für jedes Einzelbild vorgenommen. Für weniger qualitätsintensive Anwendungen kann jedoch auch eine Synchronisation nur zum Beispiel für jedes zweite, dritte, vierte, etc. Einzelbild vorgenommen werden. Dies kann dadurch erreicht werden, dass immer nur bestimmte Zeitcodes aus der Folge aus Synthese-Zeitcodes und manipulierten Synthese-Zeitcodes von der Audioverarbeitungseinrichtung 24 berücksichtigt werden. Alternativ könnte jedoch auch eine entsprechende Funktionalität dadurch erreicht werden, dass lediglich für jeden z. B. vierten erfassten Zeitcode ein Synthese-Zeitcode bzw. manipulierter Synthese-Zeitcode erzeugt wird.

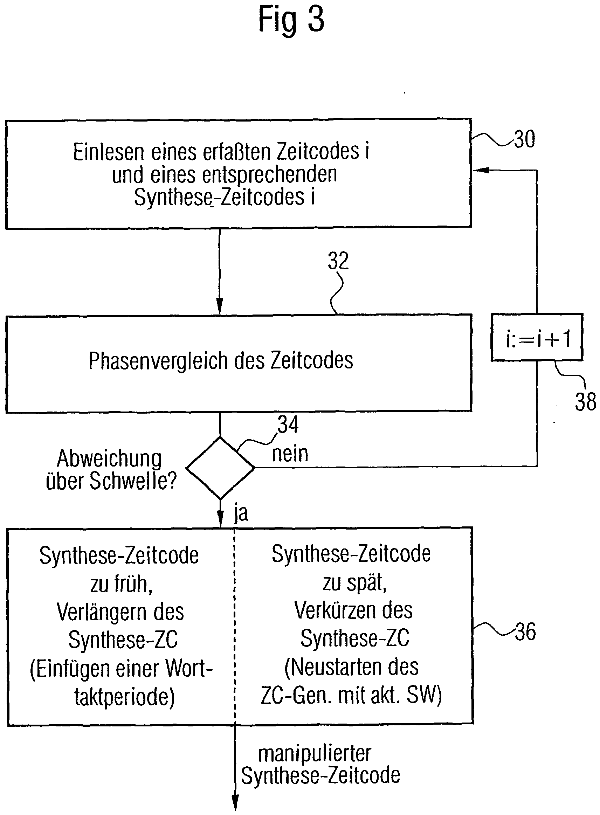

Nachfolgend wird bezugnehmend auf Fig. 3 detaillierter auf die Funktionalität des Vergleichers 16 und des Zeitcodemanipulators 20 von Fig. 1 eingegangen. In einem ersten Schritt 30 liest der Vergleicher einen erfassten Zeitcode i und einen entsprechenden Synthese-Zeitcode i bezogen auf einen Referenzzeitpunkt ein, wie beispielsweise ein Ereignis in einem Taktzyklus eines Wordclocks bzw. Worttakts, auf den später eingegangen wird. Als Taktereignis kann beispielsweise eine ansteigende Flanke, eine abfallende Flanke oder je nach Ausführungsform ein Nulldurchgang des Worttakts eingesetzt werden.

Anschließend wird ein Phasenvergleich der Zeitcodes vorgenommen, um festzustellen, ob ein Phasenversatz zwischen dem Synthese-Zeitcode und dem erfassten Zeitcode vorhanden ist. Wie es ausgeführt worden ist, umfasst ein Zeitcode, der sich z. B. über ein gesamtes Einzelbild erstreckt bzw. in einem (z. B. vorderen) Bereich eines Einzelbildes je nach Implementierung des Filmprojektors angeordnet ist, eine definierte Folge von ansteigenden und abfallenden Flanken, die sowohl die Frameinformation als auch die Zeitinformation codiert, wie sie anhand von Fig. 2 dargestellt worden sind. Der erfasste Zeitcode hat typischerweise keine besonders schöne Form, da er optisch ausgelesen worden ist. Insbesondere ist er mit Jitter und Rauschen behaftet. Dagegen hat der Synthese-Zeitcode, da er von einem eigenen digitalen Synthese-Zeitcode-Generator erzeugt worden ist, eine definierte klar spezifizierte Form hinsichtlich der Flankensteilheiten, die weder rausch- noch jitterbehaftet sind.

Ferner ist die Folge von ansteigenden und abfallenden Flanken im erfassten Zeitcode und im Synthese-Zeitcode identisch, da beide zu vergleichenden Codes dieselbe Frameinformation und Zeitinformation codieren. Ein Phasenvergleich kann daher dahingehend stattfinden, dass festgestellt wird, ob der Synthese-Zeitcode bezüglich des erfassten Zeitcodes entweder in positiver oder in negativer Richtung zeitlich verschoben ist, also einen positiven bzw. negativen Phasenversatz hat. Liefert dieser Phasenvergleich, der in einem Schritt 32 von Fig. 3 durchgeführt wird, eine Phasenabweichung, die über einer Schwelle ist, was in einem Entscheidungskasten 34 entschieden wird, so wird zu einem Schritt 36 übergegangen, auf den nachfolgend eingegangen wird. Stellt der Entscheidungsblock 34 jedoch fest, dass die Abweichung unter der Schwelle ist, so wird der Schritt 30 für das Paar aus nächstem erfasstem Zeitcode und nächstem Synthese-Zeitcode durchgeführt, was durch den Inkrementierungskasten 38 symbolisch dargestellt ist.

Ist die Abweichung über der Schwelle, so wird weiter festgestellt, ob der Synthese-Zeitcode zu früh kommt, also ob der Zeitcodegenerator 12 bezüglich der vorgefundenen erfassten Zeitcodes zu schnell läuft. Ist dies der Fall, so wird der Synthese-Zeitcode verlängert, und zwar vorzugsweise durch Einfügen lediglich einer einzigen Worttaktperiode bevorzugterweise am Ende des Synthese-Zeitcodes. Wird dagegen festgestellt, dass der Synthese-Zeitcode zu spät kommt, so dass der Zeitcode-Generator 12 von Fig. 1 bezüglich der Folge von erfassten Zeitcodes zu langsam ist, so wird der Synthese-Zeitcode, der die Phasenabweichung ergeben hatte, verkürzt. Dies findet vorzugsweise dadurch statt, dass der Zeitcode-Generator 12, wie es durch eine gestrichelte Leitung 26 in Fig. 1 schematisch dargestellt ist, neu gestartet wird, und zwar mit dem für den nächsten Zeitcode gültigen Startwert.

Die Verlängerung bzw. Verkürzung eines Synthese-Zeitcodes äußert sich daher typischerweise dadurch, dass der letzte Impuls des Zeitcodes etwas kürzer bzw. etwas länger wird. Dies ist für einen Zeitcode-Decodierer jedoch nicht problematisch, wenn reale Verhältnisse betrachtet werden. Wenn davon ausgegangen wird, dass Einzelbilder mit einer Frequenz von 24 Hz abgespielt werden, und dass sich ein Zeitcode über ein gesamtes Einzelbild erstreckt, und dass ein Zeitcode eine Länge von 8 Bit hat, wobei für jedes Bit zwei Zeitcodetaktperioden fällig sind, so beträgt die Frequenz des Signals, das dem Zeitcode zugrunde liegt, etwa 384 Hz. Dagegen ist der Worttakt, von dem der Synthese-Zeitcode-Generator betrieben wird, typischerweise bei 48 kHz. Dies bedeutet, dass auf eine Zeitcodetaktperiode 125 Worttaktperioden fallen. Eine Abweichung dahingehend, dass die letzte Zeitcodeperiode nunmehr beispielsweise statt 125 Perioden 124 oder 126 Perioden lang ist, ist für nachfolgende Decodiererschaltungen unproblematisch.

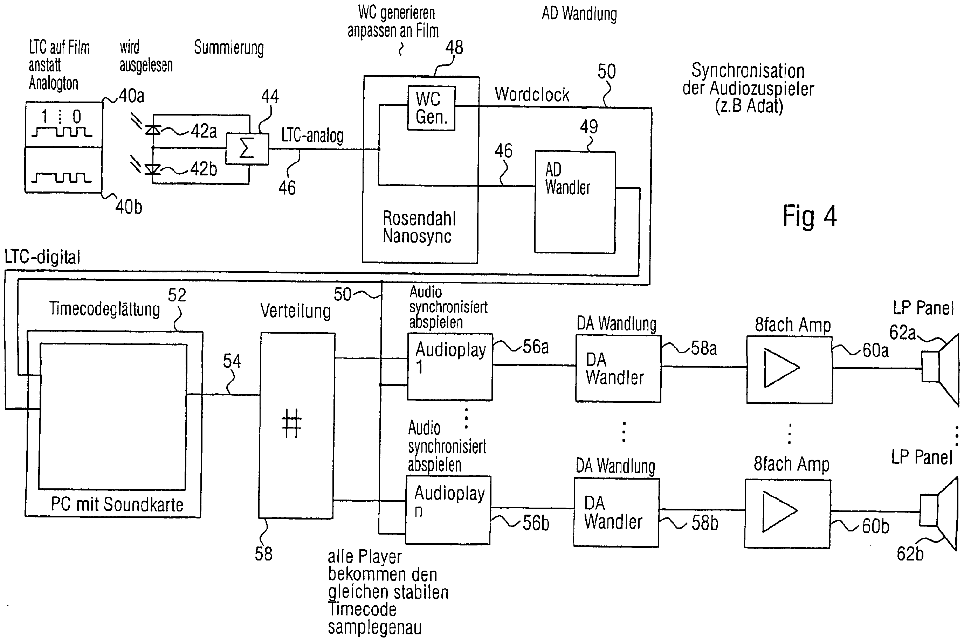

Fig. 4 zeigt ein Gesamtsystem eines bevorzugten Ausführungsbeispiels der vorliegenden Erfindung zur Synchronisation der Audiozuspieler mit dem sog. Adat-Standard. Links oben in Fig. 4 ist ein auf dem Film aufbelichteter Timecode 40 a dargestellt. Bei dem in Fig. 4 gezeigten Ausführungsbeispiel wird eine logische "1" durch einen langen Hell- bzw. Dunkel-Impuls codiert, während eine logische "Null" durch zwei kurze Hell- bzw. Dunkel-Impulse codiert wird. Die in Fig. 1 gezeigte Einrichtung 10 zum Erfassen ist bei diesem Ausführungsbeispiel ausgebildet, um den direkt auf dem Film aufbelichteten Zeitcode auszulesen, beispielsweise mittels eines Photodetektors (z. B. Photodiode) 42a. Aus Redundanzgründen wird bei dem in Fig. 4 gezeigten Ausführungsbeispiel ferner eine zweite Zeitcodespur 40b auf dem Film verwendet, die durch eine zweite Photodiode 42b ausgelesen wird. Die Ergebnisse der beiden Photodioden werden dann in einem Summierer 44 summiert, um die Folge von erfassten Zeitcodes an einem Ausgang 46 auszugeben. Die Folge von erfassten Zeitcodes wird in Fig. 4 auch mit "LTC-Analog" bezeichnet.

Bei dem in Fig. 4 gezeigten Ausführungsbeispiel ist ferner eine Einrichtung 48 zum Erzeugen eines Worttakts WC mit einer Worttaktfrequenz vorhanden, wobei die Einrichtung 48, wie es aus Fig. 4 gezeigt ist, ausgebildet ist, um basierend auf der Folge von erfassten Zeitcodes zu arbeiten, so dass die Worttaktfrequenz an die Einzelbild-Frequenz, die letztendlich in der Folge von erfassten Zeitcodes enthalten ist, angepasst ist. Die Einrichtung 48 liefert somit ausgangsseitig den Worttakt (Wordclock 50) sowie die eingangsseitig zugeführte Folge von erfassten Zeitcodes, die einfach durch die Einrichtung 48 hindurchgeführt wird.

Vorzugsweise wird als Einrichtung zum Erzeugen des Worttakts ein in der Technik unter dem Stichwort "Rosendahl-Nanosync" bekannter Worttaktgenerator verwendet. Die Funktionalität dieses Worttaktgenerators 48 besteht darin, aus der Folge von erfassten Zeitcodes eine aktuelle Einzelbildfrequenz zu extrahieren. Dies kann beispielsweise dadurch bewerkstelligt werden, dass immer die erste Taktflanke eines erfassten Zeitcodes ermittelt wird und dann auf der Basis einer Mittelung über zeitliche Abstände dieser ersten Flanken eine aktuelle Frequenz der Einzelbilder bestimmt wird. Bei einem bevorzugten Ausführungsbeispiel beträgt die Einzelbildfrequenz 24 Frames pro Sekunde. Bei diesem Ausführungsbeispiel soll der Worttakt eine Worttaktfrequenz haben, die für eine Einzelbildfrequenz von genau 24 Hz 48 kHz beträgt. Dies bedeutet, dass der Worttakt so gewählt wird, dass im idealen Fall 2000 Worttaktzyklen innerhalb eines Einzelbildes vorhanden sind. Aufgrund der typischerweise auftretenden mechanischen Schwankungen des Filmprojektors wird der Filmprojektor jedoch nicht immer genau mit 24 Hz arbeiten, sondern kann in einem Schwankungsbereich, der sich zu Werten kleiner als 24 Hz und zu Werten größer als 24 Hz erstreckt, arbeiten.

Bei dem in Fig. 4 gezeigten Ausführungsbeispiel der vorliegenden Erfindung wird diese Schwankung bereits dadurch berücksichtigt, dass der Worttakt zu bestimmten Zeitpunkten, beispielsweise alle 5 bis 15 Sekunden und vorzugsweise alle 10 Sekunden aktualisiert wird. Der Generator 48 ist hierzu ausgebildet, um in dem Zeitraum die mittlere Einzelbildfrequenz bestimmen und zum Beispiel basierend auf einem festen Faktor, wie beispielsweise 2000, die Worttaktfrequenz einzustellen. Je nach Schwankung der Einzelbildfrequenz wird die Worttaktfrequenz daher zum Beispiel zwischen 47,995 kHz und 48,005 kHz basierend auf der aktuellen Einzelbildfrequenz springen.

In dem Worttakt-Generator 48 ist der Analog/Digital-Wandler nachgeschaltet, um die noch analog vorliegende Folge von erfassten Zeitcodes analog/digital zu wandeln und in einen Zeitcodeglätter 52 einzuspeisen, der typischerweise in einem PC mit Soundkarte ausgeführt sein wird. Der Timecodeglätter 52 vereinigt die Elemente 12, 14, 16, 20 von Fig. 1 und liefert ausgangsseitig, also an einem Ausgang 54, die Folge von Synthese-Zeitcodes bzw. manipulierten Synthese-Zeitcodes. Bei dem in Fig. 4 gezeigten Ausführungsbeispiel umfasst das in diskreten Abtastwerten vorliegende Audiosignal nicht nur einen Audiokanal, sondern n Audiokanäle. Die Audiokanäle sind typischerweise in den Audioverarbeitungseinrichtungen 56a, 56b gespeichert. Eine Audioverarbeitungseinrichtung 56a bzw. 56b würde bei dem in Fig. 4 gezeigten Ausführungsbeispiel der Audioverarbeitungseinrichtung 24 von Fig. 1 entsprechen. Die Folge von synthetisch erzeugten Synthese- bzw. manipulierten Synthese-Zeitcodes auf der Leitung 54 wird einem Verteiler 58 zugeführt, der eine Kopie der Folge durchführt und gleichzeitig eine Verteilung der Folge an alle Audioplayer 56a, 56b ...führt. Damit wird sichergestellt, dass alle Player den gleichen stabilen Timecode samplegenau erhalten. Jede Audioverarbeitungseinrichtung wird ferner bei dem in Fig. 4 gezeigten Ausführungsbeispiel mit dem Worttakt 50 versorgt, derart, dass pro Taktzyklus des Worttakts 50 jede Audioverarbeitungseinrichtung einen Abtastwert des entsprechenden Audiokanals und des entsprechenden Einzelbildes zu einem nachgeschalteten Digital/AnalogWandler 58a bzw. 58b liefert. Die Digital/Analoggewandelten Abtastwerte werden dann vorzugsweise durch einen 8-fach-Verstärker pro Zweig 60a, 60b verstärkt und dem entsprechenden Lautsprecher-Panel 62a, 62b zugeführt. Ein Lautsprecherpanel umfasst entweder einen oder eine Gruppe von benachbarten Lautsprechern, die alle mit demselben Audiokanal angesteuert werden sollen.

Auf dem Filmstreifen wird der Standardzeitcode in analoger Form vorzugsweise auf die typischerweise in allen Formaten vorhandenen Lichttonspur ausbelichtet. Hierzu wird vorzugsweise der analoge Timecode, der auch als LTC bekannt ist, verwendet, wobei dieser Zeitcode in normalen Studioumgebungen vorhanden ist, so dass keine neue Hardware zur Erzeugung dieses Zeitcodes benötigt wird.

Normale Kopierwerke sind in der Lage, Analogspuren auf den Film zu belichten. Insofern erscheint der zu belichtende Zeitcode solchen Kopierwerken als analoges Audiomaterial. Daher wird auch für Kopierwerke keine neue Hardware benötigt.

In typischen Filmtheatern sind Kinomaschinen immer mit Lichttonlesern (Analog Reader) ausgestattet. Daher kann der auf dem Film aufbelichtete Zeitcode wieder mit diesen konventionellen Readern ausgelesen werden, so dass kein spezieller Reader für das erfasste System erforderlich ist. Durch die Einrichtungen 42a, 42b, 44 wird der Zeitcode nunmehr ausgelesen und im Pegel angepasst. Dies geschieht üblicherweise durch einen Mikrophonvorverstärker, der eine Pegelumsetzung durchführt, so dass beispielsweise ein Pegel von etwa 20 mV auf einen Pegel von z. B. 0,775 V umgesetzt wird.

Der Sync-Referenzgenerator (Rosendahl-Nanosync) 48 dient dazu, einen Takt aus dem vom Film gelesenen Zeitcode zu generieren und dessen Frequenz auf den Film anzupassen. Das Taktsignal ist ein für Fachleute bekannter Wordclock oder Worttakt, der in Studioumgebungen normalerweise verwendet wird.

Der ausgelesene Zeitcode ist aufgrund der Zuspielung über ein mechanisch basiertes System noch instabil, d.h. er schwankt, er ist jitterbehaftet und er ist insbesondere frequenzinstabil.

Durch den Analog/Digital-Wandler 49 wird die noch analog vorliegende Folge von erfassten Zeitcodes auf der Leitung 46 abgetastet und quantisiert (digitalisiert) und im Zeitcodeglätter 52 geglättet und stabilisiert, wie es nachfolgend für ein bevorzugtes Ausführungsbeispiel der vorliegenden Erfindung dargelegt wird.

Zunächst wird der digitalisierte analoge Zeitcode für ein Einzelbild decodiert und mit einem durch den Zeitcode-Generator 12 von Fig. 1 erzeugten intern generierten rein digitalen Zeitcode verglichen. Dieser interne Zeitcode läuft kontinuierlich vorwärts und wird vorzugsweise durch den Worttakt getaktet, der vorzugsweise nicht konstant ist, sondern vom Worttaktgenerator 48 entsprechend der Abspielfrequenz der Einzelbilder nachgeführt wird.

Da der externe Worttakt an die Geschwindigkeit der eintreffenden analogen Zeitcodes auf der Leitung 46 und damit an die Geschwindigkeit des Films angeglichen ist, laufen der intern generierte Zeitcode (Zeitcode-Generator 12 von Fig. 1) und der externe Zeitcode (auf der Leitung 46 von Fig. 4) bereits nahezu synchron. Der Einsatz des Worttaktgenerators 48, um einen von der Filmabspielgeschwindigkeit abhängigen Worttakt zu erzeugen, liefert somit bereits eine Grobsynchronisation.

Um noch vorhandene Schwankungen zwischen der Folge von erfassten Zeitcodes und der Folge von Synthese-Zeitcode zu glätten, wird kontinuierlich die Differenz zwischen internem und externem Zeitcode verglichen, wobei in dem Fall, indem eine zu große Differenz besteht, der interne Zeitcode-Generator mit dem aktuellen externen Zeitcode vorzugsweise neu gestartet wird. Der aktuelle externe Zeitcode wird somit als Startwert zum Neustart des Zeitcode-Generators 12 von Fig. 1 verwendet.

Dies bedeutet automatisch, dass der zuvor noch durch den Zeitcode-Generator erzeugte Zeitcode nicht komplett fertig geschrieben wird, sondern etwas früher endet, wie es vorstehend ausgeführt ist. Durch das Neustarten des Zeitcodegenerators wird somit der Synthese-Zeitcode, der unmittelbar vor dem Neustart des Zeitcode-Generators erzeugt worden ist, manipuliert.

Bei einem bevorzugten Ausführungsbeispiel der vorliegenden Erfindung wird eine Artefakt-reduzierte Zeitcode-Synthese-Code-Annäherung erreicht. Hier wird der Umstand ausgenutzt, dass sich kleinste Sprünge von einem Sample nicht als Knackser im Ton bemerkbar machen. Laufen der interne und der externe Zeitcode auseinander, so wird im intern generierten Zeitcode eine Periode des Wordclocks ausgelassen beziehungsweise eine Periode des Wordclocks eingefügt, was dazu führt, dass alle Audioverarbeitungseinrichtungen beziehungsweise Audio-Abspieler um ein Sample springen, also entweder ein Sample weglassen oder ein Sample wiederholen, so dass sich ihre Abspielposition langsam an die richtige Zeitposition anpasst. Dies ist der Fall, da die Audioverarbeitungseinrichtung beziehungsweise die mehreren Audioverarbeitungseinrichtungen ebenfalls mit dem Worttakt angesteuert werden, derart, dass sie immer zu einem bestimmten Ereignis in einem Taktzyklus des Worttakts, beispielsweise bei einer steigenden Flanke, bei einer fallenden Flanke oder bei einem Nulldurchgang den nächsten Audio-Abtastwert bereitstellen.

Da der interne Zeitcode, also die Folge aus Synthese-Zeitcodes und manipulierten Synthese-Zeitcodes digital erzeugt wird und somit definiert steile Flanken hat, können sich alle Audio-Verarbeitungseinrichtungen beziehungsweise Audio-Abspieler über ihren integrierten Zeitcode-Dekodierer auf diese Flanken synchronisieren. Hierbei wird die Position des zuletzt dekodierten Zeitcodes im Inputbuffer der über den Worttakt getakteten Audioverarbeitungseinrichtungen beziehungsweise Audioabspieler bestimmt, um daraus den Zeitpunkt am Beginn des nächsten zu spielenden Buffers zu errechnen. Dieser Zeitpunkt wird mit der wirklichen Abspielposition verglichen und bei einem vorhandenen Versatz automatisch aufgrund der manipulierten Synthese-Zeitcodesamples genau angeglichen.

Auf diese Weise können beliebig viele angeschlossene Audiozuspieler synchronisiert werden, so dass beliebig viele Audiospuren beziehungsweise Audiokanäle zu einem Film synchronisiert werden können.

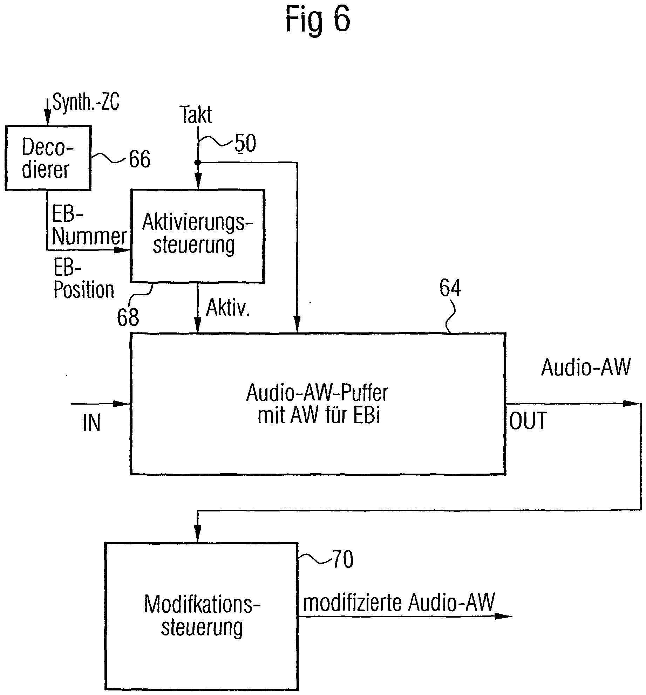

Hierzu wird bezugnehmend auf Fig. 6 eine bevorzugte Ausführung der Audioverarbeitungseinrichtung 24, beziehungsweise der Audioverarbeitungseinrichtungen 56a, 56b von Fig. 4 dargestellt. Jede Audioverarbeitungseinrichtung umfasst einen Audio-Abtastwert-Puffer in dem zumindest die Audio-Abtastwerte für das Einzelbild (EBi) gespeichert sind. Der Puffer ist in Fig. 6 mit 64 dargestellt. Eingangsseitig empfängt die Audioverarbeitungseinrichtung 24, wie es aus Fig. 1 ersichtlich ist, einen Synthese-Zeitcode, beziehungsweise einen manipulierten Synthese-Zeitcode, der zunächst einem Dekodierer 66 zugeführt wird. Der Dekodierer 66 ermittelt aus dem empfangenen Zeitcode beziehungsweise Synthese-Zeitcode die Einzelbild-Nummer beziehungsweise Einzelbild-Position des Einzelbildes in der Folge von Einzelbildern, die den Film darstellen.

Die Nummer beziehungsweise Position wird einer Aktivierungssteuerung 68 zugeführt, der gleichzeitig der Worttakt 50 (Fig. 4) zugeführt wird. Die Aktivierungssteuerung 68 ist bei einem Ausführungsbeispiel der vorliegenden Erfindung so ausgebildet, um ein Aktivierungssignal an den Audiopuffer 64 zu liefern, wenn zum einen die dekodierte Einzelbild-Nummer beziehungsweise Einzelbild-Position von der Einrichtung 68 empfangen worden ist, und wenn zum anderen ein nächstes definiertes Ereignis im Taktzyklus des Worttakts 50 folgt. Dieses Ereignis ist zum Beispiel eine ansteigende Taktflanke, eine abfallende Taktflanke oder ein Nulldurchgang.

Das Aktivierungssignal bewirkt, dass das erste Audio-Sample für das durch den Dekodierer 66 ermittelte Einzelbild ausgegeben wird. Dann wird gewissermaßen automatisch gesteuert vom Worttakt bei jedem neuen Worttaktzyklus ein weiterer Audio-Abtastwert ausgegeben. Die Audio-Ausgabe wird so lange fortgeführt, bis die Aktivierungssteuerung 68 ein neues Aktivierungssignal zu dem Audio-Puffer liefert, was darauf hindeutet, dass ein nächster Synthese-Zeitcode dekodiert und der Aktivierungssteuerung zugeführt worden ist.

Sollten zu diesem Zeitpunkt noch Audio-Abtastwerte in dem Puffer 64 sein, die für das Einzelbild i vorgesehen sind, obgleich bereits die Ausgabe der Abtastwerte für das Einzelbild i+1 gefordert wird, so ist eine Modifikationssteuerung 70 ausgebildet, um die restlichen im Puffer vorhandenen Abtastwerte für das Einzelbild i zu verwerfen, also nicht auszugeben, sondern gleich mit den Abtastwerten für das Einzelbild i+1 weiterzumachen. Ist der Puffer 64 dagegen leer, obgleich noch kein neues Aktivierungssignal von der Aktivierungssteuerung 68 erhalten worden ist, so ist die Modifikationssteuerung 70 ausgebildet, um das letzte aus dem Puffer 64 gezogene Audio-Sample zum Beispiel zu wiederholen, um die sich ergebende Lücke aufzufüllen. Natürlich können auch andere Maßnahmen vorgenommen werden, um die Lücke aufzufüllen, beispielsweise eine Interpolation von Abtastwerten, eine Pause etc.

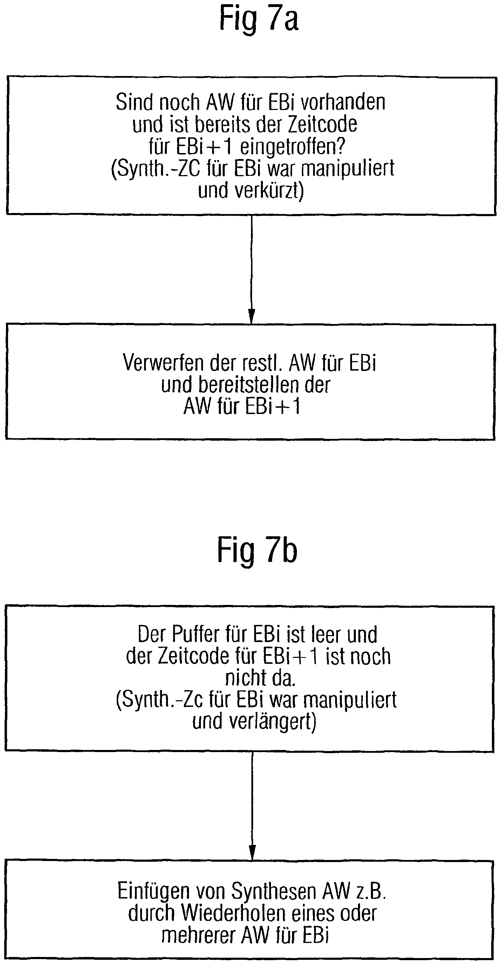

Die Funktionalität der Modifikationssteuerung 70 ist in Fig. 7a für den Fall dargestellt, bei dem noch Abtastwerte im Puffer sind, obgleich bereits ein neues Aktivierungssignal aufgrund des Empfangs eines neuen Synthese-Zeitcodes vorhanden sind. Dagegen zeigt Fig. 7b den Fall, bei dem der Puffer bereits leer ist, der Zeitcode für das nächste Einzelbild jedoch noch nicht da ist.

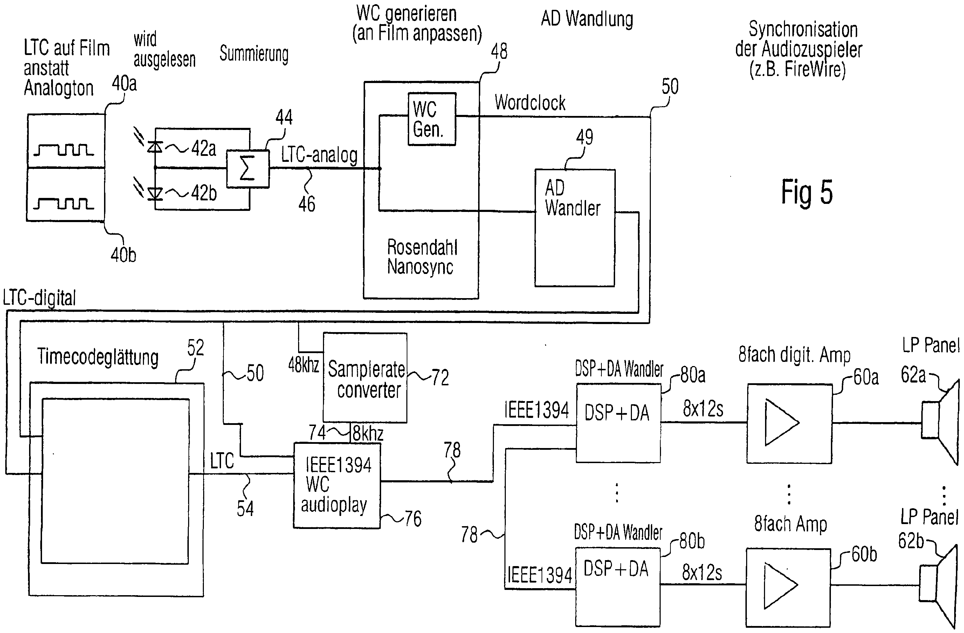

Fig. 5 zeigt eine alternative Ausführungsform zu der "Verteilung" des regenerierten Zeitcodes von Fig. 4. Vorzugsweise wird für das in Fig. 5 gezeigte Ausführungsbeispiel auf das Datenübertragungsformat gemäß dem Standard IEEE 1394 zurückgegriffen. Dieser Standard ist dadurch gekennzeichnet, dass der Takt ein konstanter Takt ist, wie beispielsweise ein Takt mit einer Frequenz von 8kHz. Hierzu wird ein Abtastraten-Wandler 72 vorgesehen, der den, wie es ausgeführt worden ist, variierenden Worttakt 50 auf den niederfrequenten Takt mit der Frequenz von 8kHz 74 umsetzt. Die Umsetzung des Abtastraten-Wandlers 72 findet dabei vorzugsweise derart statt, dass der auf den Film angepasste Worttakt 50 auf den IEEE 1394-Takt 74 synchronisiert wird. Dies wird vorzugsweise mittels des Abtastraten-Wandlers 72 als Hardwarelösung durchgeführt. Eine Audioverarbeitungseinrichtung 76, die der Audioverarbeitungseinrichtung 24 von Fig. 1 entspricht, erhält somit den IEEE 1394-Takt einerseits, den Worttakt 50 andererseits sowie die Folge aus Synchronisations-Zeitcodes beziehungsweise manipulierten Synchronisations-Zeitcodes, um im Gegensatz zu dem in Fig. 4 gezeigten Ausführungsbeispiel sämtliche Audiokanäle auf einen Übertragungsbus 78 zeitgenau zu legen. Sämtliche nachgeschalteten Signalprozessoren/Wandler-Kombinationen 80a, 80b greifen auf den Übertragungsbus 78 zu und extrahieren von dort den für sie vorgesehen Audiokanal, um denselben dann dem nachgeschalteten Verstärker und schließlich dem zugeordneten Lautsprecher-Panel zuzuführen.

Bei einem alternativen Ausführungsbeispiel der vorliegenden Erfindung wird eine Lichttonspur, die auch als Monodownmix bezeichnet wird, nicht mit den Zeitcodes belichtet, um diese weiterhin zur Verfügung zu haben. Die andere Lichttonspur wird dafür eingesetzt, um den Zeitcode aufbelichtet zu bekommen. Ein 2-Kanal-Reader liest dann von der einen Spur den Ton (Monodownmix) und von der anderen Spur den Zeitcode.

Wieder alternativ kann der analoge Zeitcode auch auf andere noch freie Stellen des Films belichtet werden. Damit ist die Kompatibilität zum üblichem Filmmaterial hinsichtlich des Lichttons gegeben. Zum Auslesen des Zeitcodes wird ein zusätzlicher Reader bereitgestellt, oder es wird ein Teil des Lichttonreaders oder der gesamte Lichttonreader umprogrammiert .

Um die Analoglichttonspur zu erhalten, was aus Kompatibilitätsgründen wünschenswert sein kann, kann der Timecode auch in den Analogton als Watermark eingebettet werden, und zwar im Sinne eines Buried Data Channel. Hierbei wird eine solche spektrale Gewichtung des Zeitcodes durchgeführt, dass eine psychoakustische Maskierungsschwelle des auf die Analogspur aufbelichteten Tonsignals größer oder gleich der Energie des Zeitcodes ist, so dass der Analogton einerseits verzerrungsfrei wiedergegeben werden kann, und dass andererseits aus dem aufbelichteten "Analogtonsignal" durch optische Dekodierung des "Analogtonsignals" und durch nachfolgende Extraktion des unhörbar eingebetteten Zeitcodes die Folge von erfassten Zeitcodes am Ausgang der Einrichtung 10 von Fig. 1 ermittelt werden kann.

Entsprechende Kodierer zum Einbetten des Zeitcodes und Dekodierer zum Extrahieren des Zeitcodes werden in diesem Fall benötigt.

Wie es bereits ausgeführt worden ist, wird es bevorzugt, eine Redundanz der Zeitcodespuren auf dem Film zu haben. Daher wird es bevorzugt, den Zeitcode zweimal auf dem Film auszubelichten, also zum Beispiel beide Lichttonspuren mit dem analogen Zeitcode zu belichten, um dann nach einer optischen Detektion des Zeitcodes die Ausgangssignale der Photodioden 42a, 42b in Fig. 5 aufzusummieren. Damit können Fehler auf der Lichttonspur beziehungsweise auf einer der beiden Lichttonspuren oder auf beiden Lichttonspuren kompensiert werden.

Eine sichere Redundanz wird auch dadurch erreicht, dass beide Zeitcodespuren getrennt abgetastet werden, und dass dann bei der Zeitcodedekodierung durch Fehlererkennung der wahrscheinlichste Zeitcode weiterverarbeitet wird.

Abhängig von den Gegebenheiten kann das erfindungsgemäße Verfahren zum Synchronisieren eines in diskreten Abtastwerten vorliegenden Audiosignals mit einem Film in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

## Patentansprüche

1. Vorrichtung zum Synchronisieren eines in diskreten Abtastwerten vorliegenden Audiosignals mit einem Film, der eine Folge von Einzelbildern aufweist, die mit einer Einzelbilder-Frequenz abspielbar sind, wobei jedes Einzelbild einen aufbelichteten Zeitcode aufweist, der auf eine Position des Einzelbildes in der Folge von Einzelbildern hinweist, und wobei einem Einzelbild eine vorbestimmte Anzahl von diskreten Abtastwerten des Audiosignals zugeordnet ist, mit folgenden Merkmalen:
einer Einrichtung (10) zum Erfassen der aufbelichteten Zeitcodes für die Folge von Einzelbildern, um eine erfasste Folge von Zeitcodes zu erhalten;
einem Zeitcodegenerator (12), der ausgebildet ist, um eine Folge von Synthese-Zeitcodes ausgehend von einem Startwert zu erzeugen;
einem Dekodierer (14) zum Dekodieren eines Zeitcodes der erfassten Folge von Zeitcodes, um den Startwert für den Zeitcodegenerator zu liefern;
einem Vergleicher (16) zum Vergleichen der Folge von Synthese-Zeitcodes mit der erfassten Folge von Zeitcodes;
einem Zeitcodemanipulator (20) zum Verändern einer zeitlichen Länge eines Synthese-Zeitcodes der Folge von Synthese-Zeitcodes, um einen manipulierten Synthese-Zeitcode zu erhalten, wenn der Vergleicher (16) eine Phasenabweichung zwischen einem Zeitcode der erfassten Folge von Zeitcodes und einem Synthese-Zeitcode der Folge von Synthese-Zeitcodes feststellt, die betragsmäßig einen vorbestimmten Abweichungs-Schwellwert überschreitet; und
einer Audioverarbeitungseinrichtung (24) zum zeitlich gesteuerten Bereitstellen der vorbestimmten Anzahl von diskreten Abtastwerten des Audiosignals, die einem Einzelbild zugeordnet sind, wenn die Audioverarbeitungseinrichtung (24) einen Synthese-Zeitcode oder einen manipulierten Synthese-Zeitcode erfasst, der das Einzelbild identifiziert.

2. Vorrichtung nach Anspruch 1, die ferner folgende Merkmale aufweist:
eine Einrichtung (48) zum Erzeugen eines Worttaktes (50) mit einer Worttaktfrequenz, basierend auf der erfassten Folge von Zeitcodes, so dass die Worttaktfrequenz an die Einzelbilder-Frequenz angepasst ist,
wobei der Zeitcodegenerator (12) ausgebildet ist, um durch den Worttakt (50) getaktet zu werden.

3. Vorrichtung nach Anspruch 1 oder 2, bei der die Audioverarbeitungseinrichtung (24) ausgebildet ist, um die diskreten Abtastwerte für ein Einzelbild gemäß dem Worttakt oder gemäß einem von dem Worttakt abgeleiteten Takt bereitzustellen.

4. Vorrichtung nach einem der vorhergehenden Ansprüche, bei der die Audioverarbeitungseinrichtung (24) eine Aktivierungssteuerung (68) aufweist, die ausgebildet ist, um die Bereitstellung der Abtastwerte dann auszuführen, wenn ein Synchronisations-Zeitcode oder ein manipulierter Synchronisations-Zeitcode dekodiert ist, und wenn ferner ein Worttakt oder ein von dem Worttakt abgeleiteter Takt ein definiertes Taktereignis hat.

5. Vorrichtung nach einem der vorhergehenden Ansprüche, bei der die Audioverarbeitungseinrichtung (24) eine Modifikationssteuerung (70) aufweist, die ausgebildet ist, um im Falle eines manipulierten Synthese-Zeitcodes, der zeitlich kürzer als ein nicht-manipulierter Synthese-Zeitcode ist, zumindest einen Abtastwert für ein Einzelbild zu verwerfen, und
um im Falle eines manipulierten Synthese-Zeitcodes, der zeitlich länger als ein nicht-manipulierter Synthese-Zeitcode ist, zumindest einen Abtastwert für ein Einzelbild zu generieren.

6. Vorrichtung nach Anspruch 5, bei der der zumindest eine generierte Abtastwert eine Kopie des letzten Abtastwerts für das entsprechende Einzelbild ist.

7. Vorrichtung nach einem der vorhergehenden Ansprüche, bei der der Zeitcodemanipulator (20) ausgebildet ist, um im Falle einer Überschreitung des Abweichungs-Schwellwerts den Zeitcodegenerator (12) mit einem Startwert neu zu starten, der auf eine Position eines Einzelbildes hinweist, das dem Einzelbild folgt, für das die Abweichung festgestellt worden ist.

8. Vorrichtung nach Anspruch 2, bei der der ZeitcodeManipulator (20) ausgebildet ist, um einen manipulierten Zeitcode lediglich um höchstens eine Anzahl von Worttaktzyklen im Hinblick auf einen nichtmanipulierten Zeitcode zu verändern.

9. Vorrichtung nach Anspruch 8, bei der die Anzahl von Taktzyklen genau einen Taktzyklus des Worttakts umfasst.

10. Vorrichtung nach einem der vorhergehenden Ansprüche,
bei der das Audiosignal eine Mehrzahl von Audiokanälen für unterschiedliche Lautsprecher aufweist, wobei die Audiokanäle in getrennten Dateien gespeichert sind, und
bei der die Vorrichtung eine Mehrzahl von Audioverarbeitungseinrichtungen (56a, 56b) aufweist, wobei jede Audioverarbeitungseinrichtung ausgebildet ist, um einen Audiokanal bereitzustellen,
wobei die Vorrichtung ferner eine Verteilungseinrichtung (58) aufweist, die ausgebildet ist, um eine Folge aus Synthese-Zeitcodes und manipulierten Synthese-Zeitcodes zu kopieren und die Kopien an die Mehrzahl von Audioverarbeitungseinrichtungen 56a, 56b zu verteilen.

11. Vorrichtung nach einem der Ansprüche 1 bis 9, bei der das Audiosignal eine Mehrzahl von Audiokanälen für unterschiedliche Lautsprecher aufweist, wobei die Audiokanäle in getrennten Dateien gespeichert sind,
bei der die Audioverarbeitungseinrichtung eine zentrale Bereitstellungseinrichtung (76) aufweist, um die Mehrzahl von Audiokanälen zeitlich gesteuert auf einen Übertragungsbus (78) bereitzustellen, und
bei der die Audioverarbeitungseinrichtung ferner eine Mehrzahl von Abspielvorrichtungen (80a, 80b) aufweist, die mit dem Übertragungsbus (78) gekoppelt sind,

12. Vorrichtung nach Anspruch 11, bei der der Übertragungsbus (78) ein Fire-Wire-Bus gemäß einem Standard IEEE 1394 ist.

13. Vorrichtung nach einem der vorhergehenden Ansprüche,
bei der die Einrichtung (10) zum Erfassen ausgebildet ist, um eine optische Erfassung der Zeitcodes durchzuführen.

14. Vorrichtung nach einem der vorhergehenden Ansprüche,
bei der der Zeitcode in eine Lichttonspur auf dem Film eingebettet ist,
bei der die Einrichtung (10) zum Erfassen ausgebildet ist, um die Lichttonspur optisch zu erfassen, um ein Tonsignal zu erhalten, und um den Zeitcode aus dem Tonsignal zu extrahieren.

15. Vorrichtung nach einem der vorhergehenden Ansprüche, bei der auf dem Film zumindest zwei gleiche Zeitcodes für ein Einzelbild vorhanden sind, und
bei der die Einrichtung (10) zum Erfassen ausgebildet ist, um beide Zeitcodes für ein Einzelbild zu erfassen und um auf der Basis der beiden erfassten Zeitcodes einen fehlerkorrigierten Zeitcode für das Einzelbild zu liefern, der dem Dekodierer (14) und dem Vergleicher (16) zuführbar ist.

16. Vorrichtung nach Anspruch 15, bei der die Einrichtung (10) zum Erfassen ausgebildet ist, um beide Zeitcodes für ein Einzelbild getrennt abzutasten, damit ein Zeitcode der beiden getrennt abgetasteten Zeitcodes, der weniger Fehler als der andere Zeitcode hat, verwendbar ist, oder bei der die Einrichtung (10) zum Erfassen ausgebildet ist, um die beiden erfassten Zeitcodes analog zu summieren

17. Verfahren zum Synchronisieren eines in diskreten Abtastwerten vorliegenden Audiosignals mit einem Film, der eine Folge von Einzelbildern aufweist, die mit einer Einzelbilder-Frequenz abspielbar sind, wobei jedes Einzelbild einen aufbelichteten Zeitcode aufweist, der auf eine Position des Einzelbildes in der Folge von Einzelbildern hinweist, und wobei einem Einzelbild eine vorbestimmte Anzahl von diskreten Abtastwerten des Audiosignals zugeordnet ist, mit folgenden Schritten:
Erfassen (10) der aufbelichteten Zeitcodes für die Folge von Einzelbildern, um eine erfasste Folge von Zeitcodes zu erhalten;
Generieren (12) einer Folge von Synthese-Zeitcodes ausgehend von einem Startwert;
Dekodieren (14) eines Zeitcodes der erfassten Folge von Zeitcodes, um den Startwert zu liefern;
Vergleichen (16) der Folge von Synthese-Zeitcodes mit der erfassten Folge von Zeitcodes;
Verändern (20) einer zeitlichen Länge eines Synthese-Zeitcodes der Folge von Synthese-Zeitcodes, um einen manipulierten Synthese-Zeitcode zu erhalten, wenn eine Phasenabweichung zwischen einem Zeitcode der erfassten Folge von Zeitcodes und einem Synthese-Zeitcode der Folge von Synthese-Zeitcodes festgestellt wird, die betragsmäßig einen vorbestimmten Abweichungs-Schwellwert überschreitet; und
Bereitstellen (24) der vorbestimmten Anzahl von diskreten Abtastwerten des Audiosignals, die einem Einzelbild zugeordnet sind, ansprechend auf ein Erfassen eines Synthese-Zeitcodes oder eines manipulierten Synthese-Zeitcodes, der das Einzelbild identifiziert.

18. Computerprogramm mit einem Programmcode zum Durchführen des Verfahrens nach Anspruch 17, wenn das Programm auf einem Computer abläuft.

## Claims

1. A device for synchronizing an audio signal present in discrete samples with a film comprising a sequence of frames that may be played with a frame frequency, wherein each frame comprises an imprinted time code indicating a position of the frame in the sequence of frames, and wherein a predetermined number of discrete samples of the audio signal is associated with a frame, comprising:
means (10) for detecting the imprinted time codes for the sequence of frames in order to obtain a detected sequence of time codes;
a time code generator (12) which is implemented to generate a sequence of synthesis time codes based on an initial value;
a decoder (14) for decoding a time code of the detected sequence of time codes in order to provide the initial value for the time code generator;
a comparator (16) for comparing the sequence of synthesis time codes with the detected sequence of time codes;
a time code manipulator (20) for changing a time length of a synthesis time code of the sequence of synthesis time codes in order to obtain a manipulated synthesis time code when the comparator (16) determines a phase deviation between a time code of the detected sequence of times codes and a synthesis time code of the sequence of synthesis time codes which exceeds a predetermined deviation threshold value with regard to its amount; and
audio processing means (24) for a time-controlled provisioning of the predetermined number of discrete samples of the audio signal associated with a frame when the audio processing means (24) detects a synthesis time code or a manipulated synthesis time code identifying the frame.

2. The device according to claim 1, further comprising:
means (48) for generating a word clock (50) having a word clock frequency based on the detected sequence of time codes, so that the word clock frequency is adapted to the frame frequency,
wherein the time code generator (12) is implemented to be clocked by the word clock (50).

3. The device according to claims 1 or 2, wherein the audio processing means (24) is implemented to provide the discrete samples for a frame according to the word clock or according to a clock derived from the word clock.

4. The device according to one of the preceding claims, wherein the audio processing means (24) comprises an activation controller (68) which is implemented to perform the provisioning of the samples when a synchronization time code or a manipulated synchronization time code is decoded and when further a word clock or a clock derived from the word clock comprises a defined clock event.

5. The device according to one of the preceding claims, wherein the audio processing means (24) comprises a modification controller (70) which is implemented to discard at least one sample for a frame in the case of a manipulated synthesis time code which is shorter in time that a non-manipulated synthesis time code, and
in the case of a manipulated synthesis time code which is longer in time than a non-manipulated synthesis time code, to generate at least one sample for a frame.

6. The device according to claim 5, wherein the at least one generated sample is a copy of the last sample for the corresponding frame.

7. The device according to one of the preceding claims, wherein the time code manipulator (20) is implemented in order to restart the time code generator (12), in case of exceeding the deviation threshold value, with an initial value which indicates a position of a frame following the frame for which the deviation was determined.

8. The device according to claim 2, wherein the time code manipulator (20) is implemented to change a manipulated time code only by at most a number of word clock cycles with regard to a non-manipulated time code.

9. The device according to claim 8, wherein the number of clock cycles includes exactly one clock cycle of the word clock.

10. The device according to one of the previous claims,
wherein the audio signal comprises a plurality of audio channels for different loudspeakers, wherein the audio channels are stored in separate files, and
wherein the device comprises a plurality of audio processing means (56a, 56b), wherein each audio processing means is implemented to provide an audio channel,
wherein the device further comprises a distribution means (58) which is implemented to copy a sequence of synthesis time codes and manipulated synthesis time codes and to distribute the copies to the plurality of audio processing means (56a, 56b).

11. The device according to one of claims 1 to 9, wherein the audio signal comprises a plurality of audio channels for different loudspeakers, wherein the audio channels are stored in separate files,
wherein the audio processing means comprises a central provisioning means (76) in order to provide the plurality of audio channels to a transmission bus (78) controlled with regard to time, and
wherein the audio processing means further comprises a plurality of playing devices (80a, 80b) which are coupled to the transmission bus (78).

12. The device according to claim 11, wherein the transmission bus (78) is a fire-wire-bus according to a standard IEEE 1394.

13. The device according to one of the preceding claims,
wherein means (10) for detecting is implemented to perform an optical detection of the time codes.

14. The device according to one of the preceding claims,
wherein the time code is embedded into an optical sound track on the film,
wherein means (10) for detecting is implemented to optically detect the optical sound track to obtain a sound signal and to extract the time code from the sound signal.

15. The device according to one of the preceding claims, wherein on the film at least two equal time codes are present for a frame, and
wherein means (10) for detecting is implemented to detect both time codes for a frame and to provide an error-corrected time code for the frame on the basis of the two detected time codes which may be supplied to the decoder (14) and the comparator (16).

16. The device according to claim 15, wherein means (10) for detecting is implemented to sample both time codes separately for one frame so that one time code of the two separately sampled time codes which comprises less errors than the other time code may be used, or wherein means (10) for detecting is implemented to sum up the two detected time codes in an analog way.

17. A method for synchronizing an audio signal present in discrete samples with a film comprising a sequence of frames that may be played with a frame frequency, wherein each frame comprises an imprinted time code indicating a position of the frame in the sequence of frames, and wherein a predetermined number of discrete samples of the audio signal is associated with a frame, comprising:
detecting (10) the imprinted time codes for the sequence of frames in order to obtain a detected sequence of time codes;
generating (12) a sequence of synthesis time codes based on an initial value;
decoding (14) a time code of the detected sequence of time codes in order to provide the initial value;
comparing (16) the sequence of synthesis time codes with the detected sequence of time codes;
changing (20) a time length of a synthesis time code of the sequence of synthesis time codes in order to obtain a manipulated synthesis time code when a phase deviation between a time code of the detected sequence of times codes and a synthesis time code of the sequence of synthesis time codes is determined which exceeds a predetermined deviation threshold value with regard to its amount; and
providing (24) the predetermined number of discrete samples of the audio signal associated with a frame in response to a detection of a synthesis time code or a manipulated synthesis time code identifying the frame.

18. A computer program having a program code for performing the method of claim 17, when the program runs on a computer.

## Revendications

1. Dispositif pour synchroniser un signal audio présent sous forme de valeurs de balayage discrètes avec un film présentant une succession d'images individuelles qui peuvent être reproduites à une fréquence d'images individuelles, chaque image individuelle présentant un code de temps inscrit par exposition qui renvoie à une position de l'image individuelle dans la succession d'images individuelles, et à une image individuelle étant associées un nombre prédéterminé de valeurs de balayage discrètes du signal audio, aux caractéristiques suivantes:
un moyen (10) destiné à détecter les codes de temps inscrits par exposition pour la succession d'images individuelles, pour obtenir une succession de codes de temps détectée;
un générateur de codes de temps (12), qui est réalisé pour générer, à partir d'une valeur de départ, une succession de codes de temps de synthèse;
un décodeur (14) destiné à décoder un code de temps de la succession de codes de temps détectée, pour fournir la valeur de départ pour le générateur de codes de temps;
un comparateur (16) destiné à comparer la succession de codes de temps de synthèse avec la succession de codes de temps détectée;
un manipulateur de code de temps (20) destiné à modifier une longueur temporelle d'un code de temps de synthèse de la succession de codes de temps de synthèse, pour obtenir un code de temps de synthèse manipulé, lorsque le comparateur (16) constate un écart de phase entre un code de temps de la succession de codes de temps détectée et un code de temps de synthèse de la succession de codes de temps de synthèse qui, en quantité, excède une valeur de seuil d'écart prédéterminée; et
un moyen de traitement audio (24) destiné à mettre à disposition de manière contrôlée dans le temps le nombre prédéterminé de valeurs de balayage discrètes du signal audio associées à une image individuelle, lorsque le moyen de traitement audio (24) détecte un code de temps de synthèse ou un code de temps de synthèse manipulé qui identifie l'image individuelle.

2. Dispositif selon la revendication 1, présentant par ailleurs les caractéristiques suivantes:
un moyen (48) destiné à générer une impulsion de mot (50) à une fréquence d'impulsions de mot, sur base de la succession de codes de temps détectée, de sorte que la fréquence d'impulsions de mot soit adaptée à la fréquence d'images individuelles,
le générateur de codes de temps (12) étant réalisé pour être cadencé par l'impulsion de mot (50).

3. Dispositif selon la revendication 1 ou 2, dans lequel le moyen de traitement audio (24) est réalisé pour mettre à disposition les valeurs de balayage discrètes pour une image individuelle selon l'impulsion de mot ou selon une impulsion dérivée de l'impulsion de mot.

4. Dispositif selon l'une des revendications précédentes, dans lequel le moyen de traitement audio (24) présente une commande d'activation (68) qui est réalisée pour exécuter la mise à disposition des valeurs de balayage lorsqu'un code de temps de synchronisation ou un code de temps de synchronisation manipulé est décodé, et lorsque par ailleurs une impulsion de mot ou une impulsion dérivée de l'impulsion de mot présente un événement d'impulsion défini.

5. Dispositif selon l'une des revendications précédentes, dans lequel le moyen de traitement audio (24) présente une commande de modification (70) qui est réalisée pour rejeter, dans le cas d'un code de temps de synthèse manipulé qui est plus court dans le temps qu'un code de temps de synthèse non manipulé, au moins une valeur de balayage pour une image individuelle, et
pour générer, dans le cas d'un code de temps de synthèse manipulé qui est plus long dans le temps qu'un code de temps de synthèse non manipulé, une valeur de balayage pour une image individuelle.

6. Dispositif selon la revendication 5, dans lequel l'au moins une valeur de balayage générée est une copie de la dernière valeur de balayage pour l'image individuelle correspondante.

7. Dispositif selon l'une des revendications précédentes, dans lequel le manipulateur de code de temps (20) est réalisé pour faire redémarrer, en cas de dépassement de la valeur de seuil de déviation, le générateur de code de temps (12) avec une valeur de départ qui indique une position d'une image individuelle qui suit l'image individuelle pour laquelle l'écart a été constaté.

8. Dispositif selon la revendication 2, dans lequel le manipulateur de code de temps (20) est réalisé pour ne modifier un code de temps manipulé que de tout au plus un nombre de cycles d'impulsion de mot par rapport à un code de temps non manipulé.

9. Dispositif selon la revendication 8, dans lequel le nombre de cycles d'impulsion de mot comprend exactement un cycle d'impulsion de l'impulsion de mot.

10. Dispositif selon l'une des revendications précédentes,
dans lequel le signal audio présente une pluralité de canaux audio pour différents haut-parleurs, les canaux audio étant mémorisés dans des fichiers séparés, et
dans lequel le dispositif présente une pluralité de moyens de traitement audio (56a, 56b), chaque moyen de traitement audio étant réalisé pour mettre à disposition un canal audio,
le dispositif présentant par ailleurs un moyen de distribution (58) qui est réalisé pour copier une succession de codes de temps de synthèse et de codes de temps de synthèse manipulés et pour distribuer les copies vers la pluralité de moyens de traitement audio (56a, 56b).

11. Dispositif selon l'une des revendications 1 à 9, dans lequel le signal audio présente une pluralité de canaux audio pour différents haut-parleurs, les canaux audio étant mémorisés dans des fichiers séparés,
dans lequel le moyen de traitement audio présente un moyen de mise à disposition central (76) pour mettre la pluralité de canaux audio de manière contrôlée dans le temps à disposition sur un bus de transmission (78), et
dans lequel le moyen de traitement audio présente par ailleurs une pluralité de dispositifs de reproduction (80a, 80b) qui sont couplés au bus de transmission (78).

12. Dispositif selon la revendication 11, dans lequel le bus de transmission (78) est un bus Fire-Wire selon une norme IEEE 1394.

13. Dispositif selon l'une des revendications précédentes,
dans lequel le moyen (10) destiné à détecter est réalisé pour effectuer une détection optique des codes de temps.

14. Dispositif selon l'une des revendications précédentes,
dans lequel le code de temps est incorporé dans une piste optique sur le film,
dans lequel le moyen (10) destiné à détecter est réalisé pour détecter optiquement la piste optique, pour obtenir un signal son, et pour extraire le code de temps du signal son.

15. Dispositif selon l'une des revendications précédentes, dans lequel sont présents sur le film au moins deux codes de temps identiques pour une image individuelle, et
dans lequel le moyen (10) destiné à détecter est réalisé pour détecter les deux codes de temps pour une image individuelle et pour fournir, sur base des deux codes de temps détectés, un code de temps à erreur corrigée pour l'image individuelle qui peut être alimenté vers le décodeur (14) et le comparateur (16).

16. Dispositif selon la revendication 15, dans lequel le moyen (10) destiné à détecter est réalisé pour balayer séparément les deux codes de temps pour une image individuelle, pour que puisse être utilisé un code de temps des deux codes de temps balayés séparément qui présente moins d'erreurs que l'autre code de temps, ou dans lequel le moyen (10) destiné à détecter est réalisé pour additionner de manière analogique les deux codes de temps détectés.

17. Procédé pour synchroniser un signal audio présent sous forme de valeurs de balayage discrètes avec un film présentant une succession d'images individuelles qui peuvent être reproduites à une fréquence d'images individuelles, chaque image individuelle présentant un code de temps inscrit par exposition qui renvoie à une position de l'image individuelle dans la succession d'images individuelles, et à une image individuelle étant associées un nombre prédéterminé de valeurs de balayage discrètes du signal audio, aux étapes suivantes consistant à:
détecter (10) les codes de temps inscrits par exposition pour la succession d'images individuelles, pour obtenir une succession de codes de temps détectée;
générer (12), à partir d'une valeur de départ, une succession de codes de temps de synthèse;
décoder (14) un code de temps de la succession de codes de temps détectée, pour fournir la valeur de départ;
comparer (16) la succession de codes de temps de synthèse avec la succession de codes de temps détectée;
modifier (20) une longueur temporelle d'un code de temps de synthèse de la succession de codes de temps de synthèse, pour obtenir un code de temps de synthèse manipulé, lorsqu'il est constaté un écart de phase entre un code de temps de la succession de codes de temps détectée et un code de temps de synthèse de la succession de codes de temps de synthèse qui, en quantité, excède une valeur de seuil d'écart prédéterminée; et
mettre à disposition (24) le nombre prédéterminé de valeurs de balayage discrètes du signal audio associées à une image individuelle, en réponse à une détection d'un code de temps de synthèse ou d'un code de temps de synthèse manipulé qui identifie l'image individuelle.

18. Programme d'ordinateur avec un code de programme pour réaliser le procédé selon la revendication 17 lorsque le programme est exécuté sur un ordinateur.
